(19) Europäisches Patentamt
European Patent Office
Office européen des brevets

(11) **EP 4 611 254 A1**

(12) **EUROPEAN PATENT APPLICATION**
published in accordance with Art. 153(4) EPC

(43) Date of publication:
**03.09.2025 Bulletin 2025/36**

(21) Application number: 23882845.3

(22) Date of filing: **28.07.2023**

(51) International Patent Classification (IPC):
**H02S 10/40** (2014.01)    **H02S 20/00** (2014.01)
**H02S 30/10** (2014.01)

(52) Cooperative Patent Classification (CPC):
**H02S 10/40; H02S 20/00; H02S 30/10;** Y02E 10/50

(86) International application number:
**PCT/KR2023/011029**

(87) International publication number:
**WO 2024/090738 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2022 KR 20220140481**

(71) Applicant: POSCO Co., Ltd
**Pohang-si, Gyeongsangbuk-do 37859 (KR)**

(72) Inventors:
• **MOON, Changho
Pohang-si, Gyeongsangbuk-do 37859 (KR)**
• **LEE, Kyeman
Pohang-si, Gyeongsangbuk-do 37859 (KR)**
• **PARK, Jongwon
Pohang-si, Gyeongsangbuk-do 37859 (KR)**
• **JUNG, Yonggyun
Pohang-si, Gyeongsangbuk-do 37859 (KR)**
• **KIM, Younghwan
Pohang-si, Gyeongsangbuk-do 37859 (KR)**

(74) Representative: **Nederlandsch Octrooibureau
P.O. Box 29720
2502 LS The Hague (NL)**

(54) **FLOATING PLATFORM AND PHOTOVOLTAIC POWER GENERATION SYSTEM**

(57)    A floating body platform and a photovoltaic power generation system are provided. A floating body platform according to an embodiment of the present invention includes a plurality of socket frames on which floating bodies are installed, and a plurality of connecting frames configured to connect the plurality of socket frames, in which the plurality of socket frames and the plurality of connecting frames are connected to each other to form a plurality of floating body unit groups each having a hexagonal truss structure.

FIG. 2

**Description**

**[Technical Field]**

The present invention relates to a floating body platform and a photovoltaic power generation system.

**[Background Art]**

In general, floating offshore photovoltaic power generation systems, compared to onshore or freshwater systems, have the advantages such as being suitable for deep waters, unaffected by the ground, movable and reusable, relatively economical, and quick to install, and having lower construction costs depending on the water depth.

However, unlike freshwater environments, the durability of floating offshore photovoltaic power generation systems is significantly related to the sea surface of the offshore area where they are installed, so wave direction, wave height, ocean currents, and the like need to be additionally considered when determining the installation location and orientation.

This is because, in a saline marine environment, a floating offshore photovoltaic power generation system can move along the direction of the ocean current due to the flow of the ocean current, the floating offshore photovoltaic power generation system moves up and down due to the wave energy of the accompanying waves, and wave resonance in an up-and-down piston mode, which occurs each time it moves up and down, is likely to occur in the floating offshore photovoltaic power generation system.

Therefore, greater durability is required for floating offshore photovoltaic power generation systems in the marine environment. Here, durability refers to static safety against external forces and dynamic safety against moments that induce oscillation.

In the marine environment, disturbances such as ocean currents (below the sea surface), waves (at the sea surface), and ocean winds (above the sea surface) occur periodically in one or more directions with varying magnitudes.

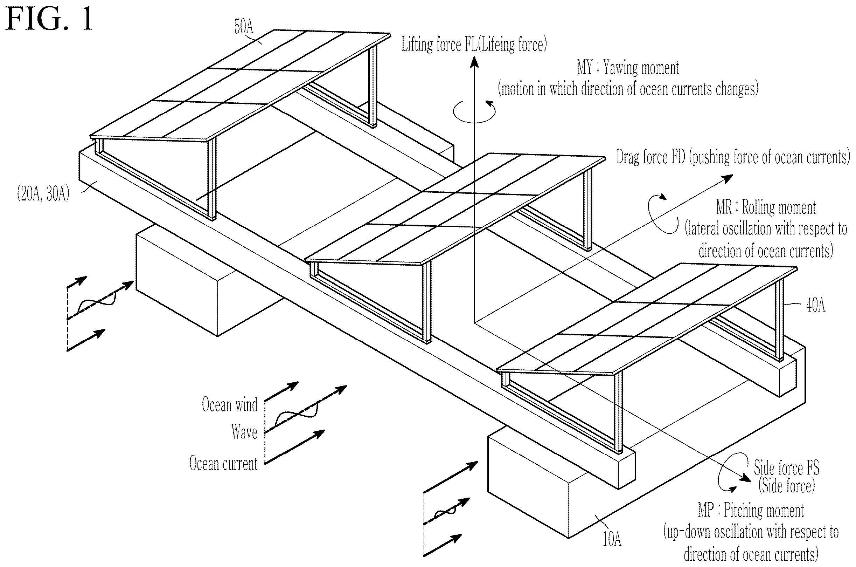

In the marine environment, factors influencing the durability of a floating offshore photovoltaic power generation system are examined. As shown in FIG. 1, a floating body platform 30A is forcibly subjected to six degrees of freedom of motion, including shifting (lateral force (side force): FS, front-rear drag force: FD), lifting (lifting force: FL), up-down oscillation in the direction of the ocean current (MP), left-right oscillation in the direction of the ocean current (MR), and rotation about an axis perpendicular to the sea surface (yawing motion) (MY).

In this case, since the length and holding force of a mooring device cable, which vary with water depth, have structural and economic limitations, the fatigue load on a mooring device or a connection part between the floating body platform 30A and a structure 40A of the floating offshore photovoltaic power generation system gradually accumulates due to the six-degree-of-freedom forced motion of the floating body platform 30A.

In FIG. 1, a floating body unit pontoon 20A and the floating body platform 30A are structures that connect multiple floating bodies 10A and function to support the structure 40A from below, which supports a photovoltaic panel module 50A.

Therefore, the floating body platform 30A of the floating offshore photovoltaic power generation system needs to be able to suppress the six-degree-of-freedom forced motion to reduce the fatigue load on the mooring device or the connection part of the structure 40A.

In addition, general photovoltaic power generation devices have differences in power generation capability depending on the power generation area and amount of sunlight.

Due to the characteristics of floating offshore photovoltaic power generation systems, which are widely installed in relatively open sea areas with a greater amount of sunlight compared to land, local differences in external forces surrounding the wide floating body platform, caused by tidal phenomena (high and low tides that occur twice a day), reduce the durability of parts of the floating body platform.

Therefore, the entire floating body platform of a floating offshore photovoltaic power generation system needs to be able to suppress the six-degree-of-freedom forced motion caused by external forces, and the floating pontoons, which are unit modules that make up the floating body platform, also need to be able to resist local differences in external forces in order to prevent local durability degradation.

Additionally, as the number of photovoltaic panel modules included in the installation area increases, the power generation capability of the floating offshore photovoltaic power generation system will increase. Since the installation area depends on a shape of the floating body platform, the shape of the floating body platform needs to be designed to approximate the given sea area as closely as possible without any excess area, which is advantageous in terms of efficiency and cost.

Therefore, a floating body platform shape design technology is required to approximate an installation area of a floating offshore photovoltaic power generation system to a given sea area.

In addition, the offshore photovoltaic power generation system requires the structure with the photovoltaic panel modules to always float above the sea surface. Therefore, a problem arises in which, if the floating body platform excessively moves on the undulating water surface due to wind or waves, the photovoltaic panel modules also experience significant shaking, which hinders stable photovoltaic power generation.

In conclusion, in order to economically secure the uniform power generation capability of a floating offshore photovoltaic power generation system, a technology is required to implement a robust floating body platform, which is made to approximate a given sea area while always remaining stable afloat on the water even when the water undulates by wind or waves.

[Disclosure]

[Technical Problem]

The present invention attempts to provide a floating body platform and a photovoltaic power generation system, which can efficiently disperse impact energy of waves and implement a robust floating body platform, which is made to approximate a given sea area while always remaining stable afloat on the water even when shifting, oscillation and the like are caused by undulating waves, ocean winds, ocean currents, and the like.

[Technical Solution]

A floating body platform according to an embodiment of the present invention includes a plurality of socket frames on which floating bodies are installed, and a plurality of connecting frames configured to connect the plurality of socket frames, in which the plurality of socket frames and the plurality of connecting frames are connected to each other to form a plurality of floating body unit groups each having a hexagonal truss structure.

Each of the socket frames may include a plurality of socket portions arranged radially around a central portion, and each of the plurality of socket portions may form a 60° angle with respect to an adjacent socket portion.

The plurality of connecting frames may be connected to the plurality of socket portions, respectively, and each of the plurality of connecting frames may form a 60° angle with an adjacent connecting frame.

Each of the socket portions may have a hollow tube shape with an empty interior.

Each of the connecting frames may have the same cross-sectional shape as that of each of the socket portions.

The plurality of socket frames and the plurality of connecting frames may each have an inverted trapezoidal cross-sectional shape.

The plurality of socket portions may include a plurality of first socket portions to which six connecting frames are connected, a plurality of second socket portions to which four connecting frames are connected, and a plurality of third socket portions to which three connecting frames are connected.

The floating body platform may further include a plurality of auxiliary socket frames arranged within the floating body unit groups.

The floating bodies may not be installed on the plurality of auxiliary socket frames.

The plurality of auxiliary socket frames may include a plurality of first auxiliary socket portions to which four connecting frames are connected, and a plurality of second auxiliary socket portions to which three connecting frames are connected.

The plurality of first auxiliary socket portions and the plurality of second auxiliary socket portions may each have a hollow tube shape with an empty interior.

The plurality of first auxiliary socket portions and the plurality of second auxiliary socket portions may each have an inverted trapezoidal cross-sectional shape.

A number (NN) of the floating bodies of the floating body platform may be set to satisfy Equation (1),

$$\text{number (NN) of floating bodies} = 3 \times n \times (n-1) + 1 \text{ --- Equation (1),}$$

where n refers to the number of floating bodies arranged on Lc, and Lc refers to a length of one side of a regular hexagon inscribed in an installation area forming a virtual circle.

A length of each of the connecting frames of the floating body platform may be set to satisfy Equation (2).

$$\text{length (Lp) of connecting frame} = Lc/(n-1) \text{ ---- Equation (2)}$$

A number of the floating bodies arranged within a horizontal or vertical width of the floating body platform may be set to satisfy Equation (3).

$$\text{number (NL) of floating bodies} = 2 \times (n-1) \text{ ---- Equation (3)}$$

A number of the floating body unit groups of the floating body platform may be set to satisfy Equation (4).

$$\text{number (NP) of floating body unit groups} = \tfrac{3}{4} \times n \times (n-2) + 1 \text{ ---- Equation (4)}$$

A number of triangles of the floating body platform may be set to satisfy Equation (5).

$$\text{number (S) of triangles of floating body platform} = 6 \times (n-1) \times (n-1) \text{ ---- Equation (5)}$$

In addition, a photovoltaic power generation system according to an embodiment of the present invention includes the floating body platform described above.

**[Advantageous Effects]**

According to an embodiment of the present invention, a floating offshore photovoltaic power generation system can be implemented which enables a structure and a photovoltaic panel module positioned on a floating body platform to always remain stably afloat on the water.

In addition, a passing flow in the form of a zigzag can be created inside the floating body platform installed over a wide area, enabling ocean current flow.

In addition, the impact energy of waves is enabled to be efficiently distributed to adjacent unit pontoons, while providing economic advantages of minimizing the number of floating body unit pontoons and maximizing the usable sea surface area.

**[Description of the Drawings]**

FIG. 1 is a schematic configuration view for illustrating six-degree-of-freedom forced motion of an offshore photovoltaic power generation system due to external forces from the ocean.

FIG. 2 is a schematic perspective view of a floating body platform of a photovoltaic power generation system according to an embodiment of the present invention.

FIG. 3 is a schematic plan view showing an installation structure of the floating body platform of the photovoltaic power generation system according to an embodiment of the present invention.

FIG. 4 is a schematic perspective view for illustrating a mounted state of the floating body platform of the photovoltaic power generation system according to an embodiment of the present invention.

FIG. 5 is a schematic plan view of a floating body platform of a photovoltaic power generation system according to an embodiment of the present invention, where (a) illustrates a basic type and (b) illustrates a reinforced type.

FIG. 6 is a schematic plan view of a floating body platform of a photovoltaic power generation system according to an embodiment of the present invention, showing a hybrid type of the basic type and the reinforced type.

FIG. 7 is a schematic plan view showing a state in which a floating body platform of a photovoltaic power generation system according to an embodiment of the present invention is inscribed within a sea area.

FIG. 8 is a schematic plan view showing a state in which a floating body platform of a photovoltaic power generation system according to an embodiment of the present invention is circumscribed around a sea area.

FIG. 9 is a schematic configuration view showing an installation area of a quadrilateral floating body platform according to a comparative example.

FIG. 10 is a schematic configuration view showing an installation area of a hexagonal floating body platform according to a comparative example.

FIG. 11 is a schematic configuration view showing an installation area of a floating body platform having a hexagonal truss structure according to an embodiment of the present invention.

FIG. 12 is a graph showing the change in the number of unit pontoons constituting a floating body platform with respect to the total number of floating bodies of the floating body platform.

**[Mode for Invention]**

In the following detailed description, only certain exemplary embodiments of the present invention have been shown and described, simply by way of illustration. As can be easily understood by one skilled in the art to which the present invention pertains, the exemplary embodiments described below may be modified into various forms without departing from the concept and scope of the present invention. As much as possible, the same or similar parts are indicated using the same reference numerals in the drawings.

The technical terms used herein are set forth only to mention specific exemplary embodiments and are not intended to limit the present invention. Singular forms used herein are intended to include the plural forms as long as phrases do not clearly indicate an opposite meaning. In the present specification, the term "comprising (including)" is intended to embody specific characteristics, regions, integers, steps, operations, elements and/or components, but is not intended to exclude presence or addition of other characteristics, regions, integers, steps, operations, elements, components, and/or groups.

All terms including technical and scientific terms used herein have the same meanings as the meanings generally understood by one skilled in the art to which the present invention pertains. Terms, such as those defined in dictionaries, are to be further interpreted as having meanings consistent with the relevant technical literature and the present disclosure, and are not to be interpreted as having idealized or overly formal meanings unless expressly so defined herein.

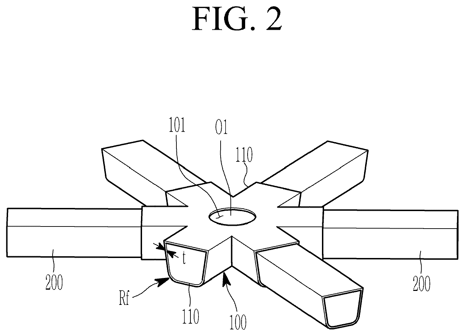

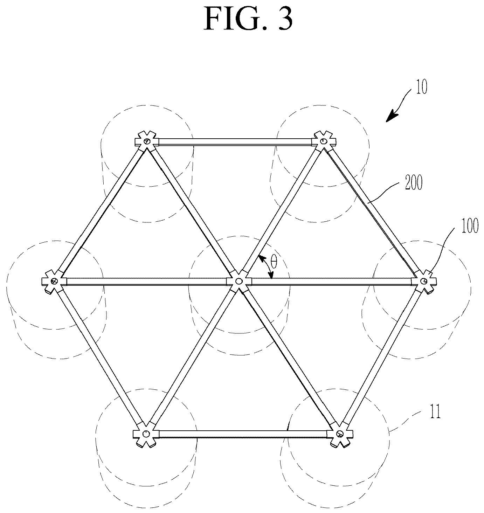

FIG. 2 is a schematic perspective view of a floating body platform of a photovoltaic power generation system according to an embodiment of the present invention, and FIG. 3 is a schematic plan view showing an installation structure of the floating body platform of the photovoltaic power generation system according to an embodiment of the present invention.

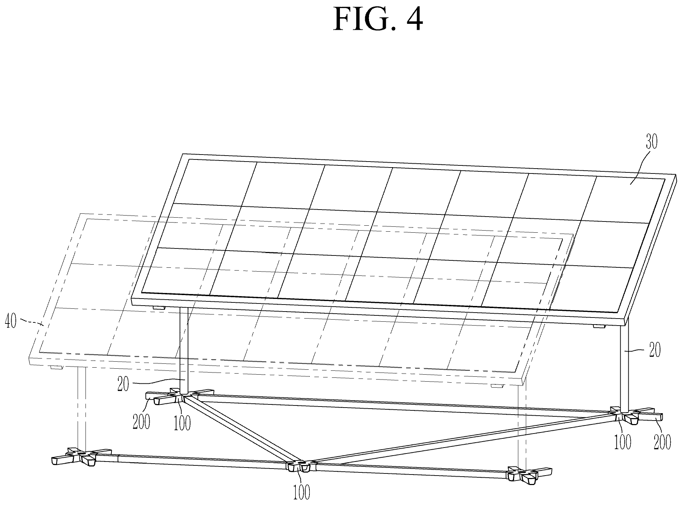

FIG. 4 is a schematic perspective view for illustrating a mounted state of the floating body platform of the photovoltaic power generation system according to an embodiment of the present invention.

Referring to FIGS. 2 to 4, a floating body platform according to an embodiment of the present invention may include a plurality of socket frames 100 on which floating bodies 11 are installed, and a plurality of connecting frames 200 connecting the plurality of socket frames 100.

The plurality of socket frames 100 and the plurality of connecting frames 200 may be connected to each other to form a plurality of floating body unit groups 10 each having a hexagonal truss structure.

The plurality of socket frames 100 and the plurality of connecting frames 200 may be fastened by welding, bolting, or the like.

In addition, each of the socket frames 100 may include a plurality of socket portions 110 arranged radially around a central portion O1.

Each of the plurality of socket portions 110 forms a set angle ($\theta$) with an adjacent socket portion 110, and may form, for example, a 60° angle for formation of the floating body unit group 10 having a hexagonal truss structure.

The plurality of connecting frames 200 may be inserted and connected to the plurality of socket portions 110.

Each of the plurality of connecting frames 200 may form a set angle, for example, a 60° angle, with an adjacent connecting frame 200.

The socket portion 110 may have, for example, a hollow tube shape with an empty interior for insertion connection of the connecting frame 200.

Additionally, the connecting frame 200 may have the same cross-sectional shape as that of the socket portion 110 for insertion connection into the socket portion 110.

Additionally, the connecting frame 200 may have, for example, a hollow tube shape with an empty interior to minimize a weight.

The plurality of socket frames 100 and the plurality of connecting frames 200 may each have an inverted trapezoidal cross-sectional shape.

As such, the plurality of socket frames 100 and the plurality of connecting frames 200 each have an inverted trapezoidal cross-sectional shape, so that an amount of lifting (an amount of variation of a centerline in a direction perpendicular to the sea surface) of the connecting frame 200 is reduced when the ocean wind blows, thereby decreasing the stress generated in the connecting frame 200 and the socket frame 100 and ensuring stable coupling force.

The plurality of socket portions 110 may include a plurality of first socket portions 111 to which six connecting frames 200 are connected, a plurality of second socket portions 112 to which four connecting frames 200 are connected, and a plurality of third socket portions 113 to which three connecting frames 200 are connected.

A plurality of auxiliary socket frames 300 arranged within the floating body unit groups 10 may be provided.

The floating bodies 11 may not be installed on the plurality of auxiliary socket frames 300.

The plurality of auxiliary socket frames 300 may include a plurality of first auxiliary socket portions 310 to which four connecting frames 200 are connected, and a plurality of second auxiliary socket portions 320 to which three connecting frames 200 are connected.

The plurality of first auxiliary socket portions 310 and the plurality of second auxiliary socket portions 320 may each have a hollow tube shape with an empty interior for insertion connection of the connecting frame 200.

The plurality of first auxiliary socket portions 310 and the plurality of second auxiliary socket portions 320 may each have an inverted trapezoidal cross-sectional shape.

In addition, an upper portion of each of the plurality of socket frames 100 may be provided with a coupling hole 101 into which a structure 20 for supporting a photovoltaic panel module 30 may be inserted and coupled. Alternatively, the structure 20 may be coupled to the socket frame 100 by bolting or welding without forming the coupling hole 101.

A passage or platform 40 for maintenance, safety inspection, and the like may be installed above the socket frames 100 and the connecting frames 200.

A number (NN) of the floating bodies 11 of the floating body platform may be set to satisfy the following equation (1).

$$\text{number (NN) of floating bodies} = 3 \times n \times (n\text{-}1) + 1 \text{ --- Equation (1)},$$

where n refers to the number of floating bodies arranged on Lc, and Lc refers to a length of one side of a regular hexagon inscribed in an installation area forming a virtual circle.

Additionally, a length (Lp) of the connecting frame 200 of the floating body platform may be set to satisfy the following equation (2).

$$\text{length (Lp) of the connecting frame} = Lc/(n\text{-}1) \text{ ---- Equation (2)}$$

A number (NL) of the floating bodies 11 arranged within a horizontal or vertical width of the floating body platform may be set to satisfy the following equation (3).

$$\text{number (NL) of floating bodies} = 2 \times (n\text{-}1) \text{ ---- Equation (3)}$$

Additionally, a number (NP) of the floating body unit groups 10 of the floating body platform may be set to satisfy the following equation (4).

$$\text{number (NP) of floating body unit groups} = \tfrac{3}{4} \times n \times (n\text{-}2) + 1 \text{ ---- Equation (4)}$$

A number (S) of triangles of the floating body platform may be set to satisfy the following equation (5).

$$\text{number (S) of triangles of floating body platform} = 6 \times (n\text{-}1) \times (n\text{-}1) \text{ ---- Equation (5)}$$

Note that, compared to freshwater, a given area on the sea is relatively large and has fewer interferences, resulting in a high degree of freedom.

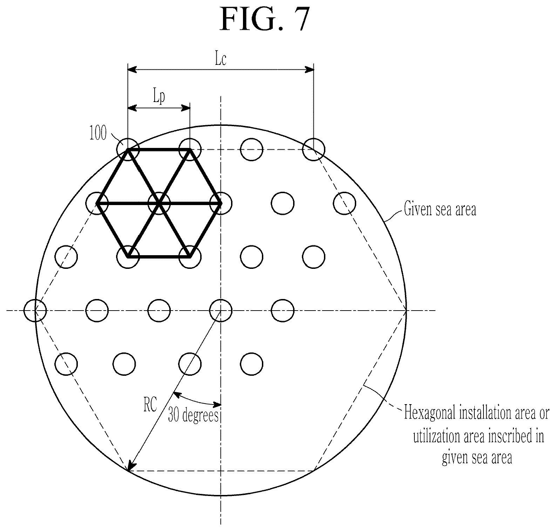

Therefore, in the present invention, as an example, a method of approximating an installation area occupied by a floating body platform to a given sea area, while assuming that the sea area where the floating power generation system is located is a circle, will be with reference to FIG. 7.

Usually, the number (NB) of floating bodies supporting a floating body platform and the equivalent diameter (DE) are determined by the force in the direction of gravity (weights of the photovoltaic panel, the photovoltaic panel module support structure, the floating body platform, the floating bodies, and the like) and the force in the opposite direction of gravity (buoyancy based on the shape of the floating bodies and the submersion ratio of the floating bodies).

Since the floating body unit group 10 of the present invention has floating bodies at seven nodes, the total number (NB) of floating bodies supporting the floating body platform is equal to the total number of nodes (NN) included in the floating body platform shown in FIG. 7, as in the following equation (6).

$$NN = NB \text{ ----Equation (6)}$$

Assuming that the number of nodes (number of floating bodies) included on one side of a regular hexagon inscribed in the circular sea area is n, the total number of nodes (NN) included in the floating body platform may be set to satisfy the following equation (7).

$$NN = 3 \times n \times (n-1) + 1 \text{ --- Equation (7),}$$

where n is always an even number.

In FIG. 7, the total number of floating bodies is 37, and n is 4.

In this case, the length (Lp) of the connecting frame 200 and the side length (Lc) of the floating body platform may be set to satisfy the following equations (8) and (9), where the radius of the floating body platform is defined as RC.

$$Lc = 2 \times RC \times \sin 30 = RC \text{ ---Equation (8)}$$

$$Lp = Lc/(n-1) \text{ ---Equation (9)}$$

In addition, since the floating body platform is a regular hexagon, the number (NL) of horizontal rows may be set to satisfy the following equation (10).

$$NL = 2 \times n - 1 \text{ ---Equation (10)}$$

As an example, in FIG. 7, NL is 7.

In this case, the total number (NP) of the actual floating body unit groups 10 may be set to satisfy the following equation (11).

$$NP = 3/4 \times n \times (n-2) + 1 \text{ --- Equation (11)}$$

As an example, in FIG. 7, NP is 7.

A number (S) of triangles forming a truss within a floating body platform may be set to satisfy the following equation (12).

$$S = 6 \times (n-1) \times (n-1) \text{ ---Equation (12)}$$

As an example, in FIG. 7, S is 54.

Additionally, the installation area may be satisfied by the following Equation (13).

$$A0 = \pi \times RC \times RC \text{ ---Equation (13)}$$

The power generation area occupied by the floating bodies may be obtained using the following Equation (14).

$$AB = 3 \times Lc \times Lc \times \cos 30 \text{ ---Equation (14)}$$

Therefore, a ratio of the power generation area to the installation area may be obtained using the following Equation (15).

$$AB/A0 = 82.7\% \text{ ---Equation (15)}$$

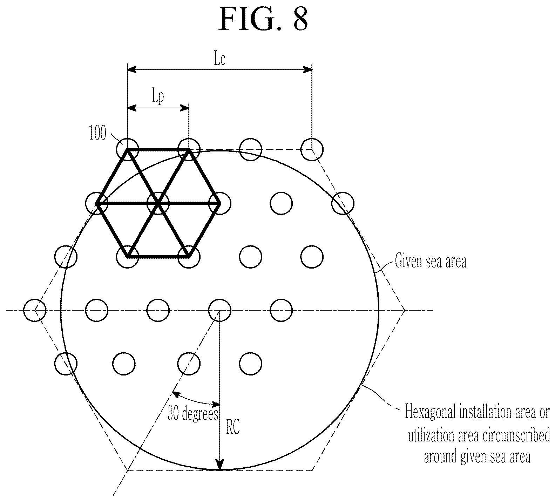

In addition, FIG. 8 shows a case where a floating body platform according to the present invention is circumscribed around a circular sea area having a radius (RC).

Unlike the floating body platform inscribed in a circle, the length Lp of the connecting frame 200 and the side length Lc of the floating body platform may be set to satisfy the following equation (16).

$$Lc = 2 \times RC \times \tan 30 \text{ --- Equation (16)}$$

Therefore, in this case, the ratio of the power generation area to the installation area may be obtained using the following equation (17).

$$AB/A0 = 110.3\% \text{ ---Equation (17)}$$

In addition, a photovoltaic power generation system according to an embodiment of the present invention may include the floating body platform described above.

Below, an operation of a floating body platform according to an embodiment of the present invention will be described with reference to FIGS. 1 to 12.

The floating body platform of the present invention includes the plurality of socket frames 100 on which floating bodies 11 are installed, and the plurality of connecting frames 200 connecting the plurality of socket frames 100, and forms the plurality of floating body unit groups 10, each of which has a hexagonal truss structure, by connecting the plurality of socket frames 100 and the plurality of connecting frames 200 to each other.

Therefore, even when the entire floating offshore photovoltaic power generation system or a part thereof frequently moves back and forth/left and right/up and down (translational motion) or oscillates (rotational motion) due to large physical energy fluctuations of ocean currents caused by ocean winds, including typhoons, and tidal phenomena, the decrease in durability can be minimized, and a passing flow in the form of a zigzag can be created to facilitate ocean current flow.

In addition, since the floating body unit group 10 has a hexagonal truss structure, the impact energy of the waves can be efficiently distributed to the adjacent floating body unit group 10.

In addition, the floating body unit groups 10 are aligned in an overlapping form by the plurality of socket frames 100 and the plurality of connecting frames 200 so that the entire system acts as a single structure, thereby making it possible to improve durability and impact resistance and to reduce installation costs by increasing installation efficiency in the sea area.

In addition, the floating body unit group 10 having a hexagonal truss structure has a low possibility of shock wave generation regardless of the direction of ocean currents and can minimize vortex regions where tidal stagnation occurs.

In particular, the floating body unit groups 10 each having a hexagonal truss structure can be integrally overlapped and coupled (connected) by the plurality of socket frames 100 and the plurality of connecting frames 200 each having an inverted trapezoidal cross-sectional shape, so that lifting force that presses the floating body platform in the direction of gravity can be generated, allowing stabilization even as the intensity of ocean winds increases.

The plurality of socket frames 100 and the plurality of connecting frames 200 each have an inverted trapezoidal cross-sectional shape, so that an amount of lifting (an amount of variation of a centerline in a direction perpendicular to the sea surface) of the connecting frame 200 is reduced when the ocean wind blows, thereby decreasing the stress generated in the connecting frame 200 and the socket frame 100 and ensuring stable coupling force.

In addition, since the plurality of auxiliary socket frames 300 are installed within the floating body unit groups 10, the robustness of the floating body platform can be increased accordingly.

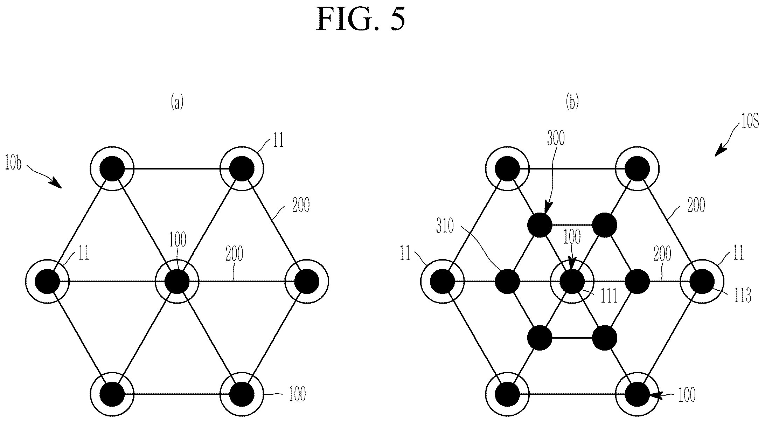

Referring to FIG. 5(a), the floating body unit group 10 of the floating body platform includes the floating bodies 11 with a set diameter, which are fastened at the hexagonal vertices and center point, and has seven nodes (hereinafter, referred to as the 'basic type 10b').

Referring to FIG. 5(b), the floating body unit group 10 of the floating body platform includes, when more structural stability is required, two hexagonal truss structures and one central point, and has 13 nodes (hereinafter, referred to as 'reinforced type 10s').

Here, to constitute an inner hexagonal truss structure, the connecting frames 200 connected to the socket frame 100 located at the center point are inserted and connected to the auxiliary socket frames 300. In this case, if additional buoyancy of the floating body unit group 10 is required, a floating body 11 may be provided at each node of the inner small hexagon.

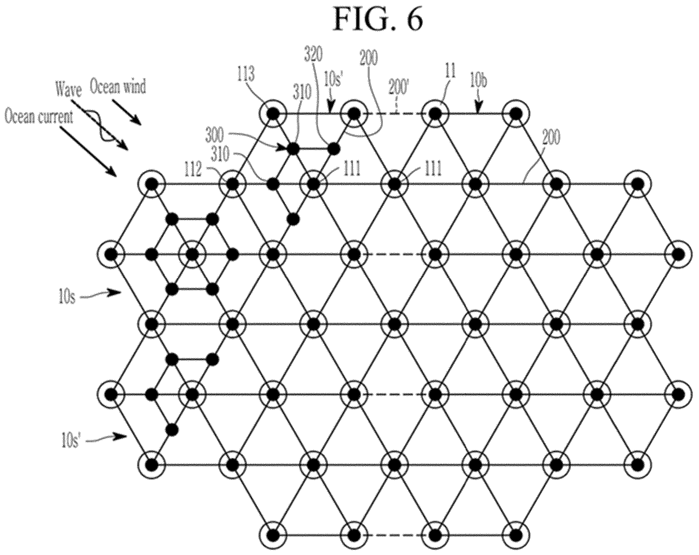

FIG. 6 shows a hybrid-type structure where the basic type 10b of the floating body platform of FIG. 5(a) and the reinforced type 10s of the floating body platform of FIG. 5(b) are combined.

In the case of such a hybrid-type floating body platform, in an installation area where the magnitude of external forces such as ocean currents, waves, and ocean winds is large, the reinforced type 10s is positioned at a location most affected by the external forces, and floating body platforms 10s' with a reduced number of nodes compared to the reinforced type 10s are arranged around it, followed by the arrangement of the floating body platforms of the basic type 10b.

In this case, to enhance the fastening force between the floating bodies 11 and maintain structural stability, a connecting frame 200' may be added to two adjacent socket frames 100 between the floating body unit groups 10 to form a new floating body unit group 10 (indicated by a dotted line).

As such, it can be seen that the structural reinforcement of the floating body unit groups 10 and the floating body platform according to the present invention can be implemented by simply connecting the socket frames 100 and the connecting frames 200 and 200'.

In addition, to enable efficient dispersion of six-degree-of-freedom forced motion with a double-symmetric structure, the floating body platform of the present invention arranges the floating body unit groups 10 in a regular hexagonal pattern using the plurality of socket frames 100 and the plurality of connecting frames 200, without the need for separate fastening means between the floating body unit groups.

Accordingly, the shifting and oscillation of the floating offshore photovoltaic power generation system can be reduced through the buffering action among the geometrically overlapped and coupled floating body unit groups 10, thereby reducing the change in the inclination angle of the photovoltaic panel module caused by waves or ocean currents.

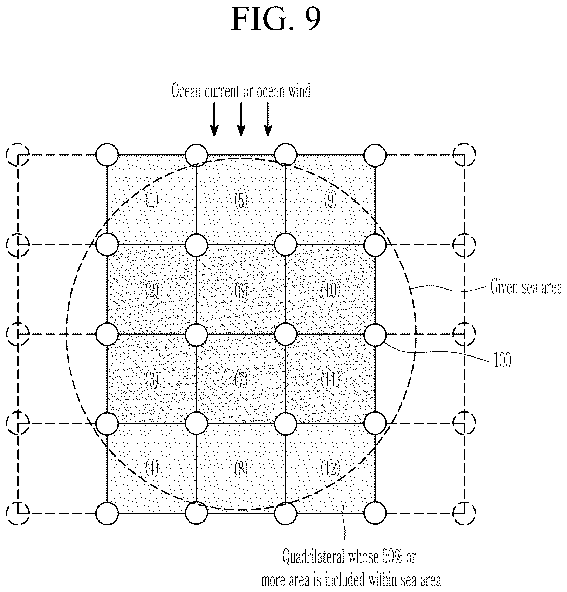

FIGS. 9 to 11 shows preferable embodiments of the present invention, comparing the installation area and the power generation area according to a comparative example and an embodiment of the present invention when the area occupied by one floating body platform is the same regardless of the shape of the floating body platform.

In the comparative example, the positions of the floating bodies vary and are not located at the nodes of the floating body platform as in the present invention. However, for comparison, it is assumed that the floating bodies are positioned at the nodes of the floating body platform as in the present invention, and a case where 50% or more area of the floating body platform is included within the sea area so as to approximate the sea area as closely as possible is assumed to be valid.

As shown in FIG. 9, in the case of the quadrilateral floating body platform of the comparative example, it can be seen that asymmetry exists depending on the direction of the installation area, and the total number of floating body unit pontoons constituting the floating body platform is 12, and the total number of floating bodies is 20.

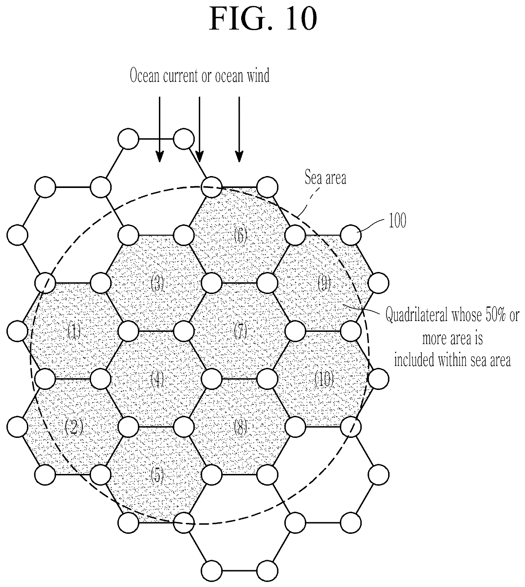

In addition, when the hexagonal floating body unit pontoons of the comparative example as shown in FIG. 10 are arbitrarily arranged, asymmetry exists depending on the direction of the installation area, similar to FIG. 9, and the total number of floating body unit pontoons is 10, and the total number of floating bodies is 32.

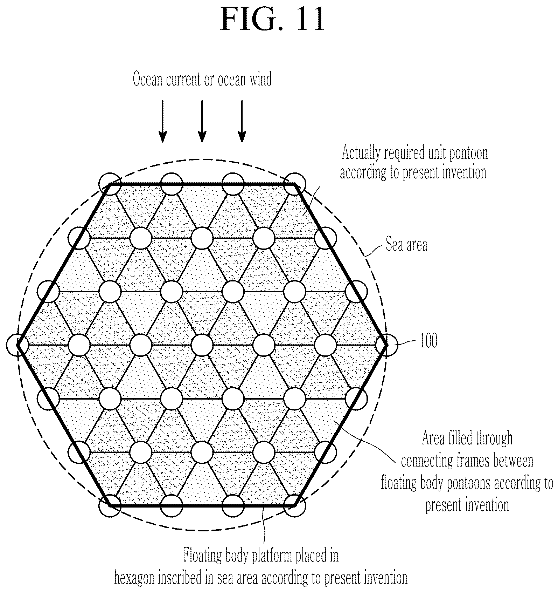

However, in the case of the floating body platform of the embodiment of the present invention as shown in FIG. 11, symmetry is maintained regardless of the direction of the installation area, the total number of unit pontoons is 7, and the number of floating bodies is 37.

Therefore, in the case of the embodiment of the present invention, it can be seen that it is possible to increase the number of floating bodies, which provide buoyancy, while reducing the number of unit pontoons.

Additionally, the floating body unit pontoons mutually share the overlapping nodes between the floating body unit pontoons.

In particular, in FIG. 11, it can be seen that the floating body unit pontoon 4 located at the center of the floating body platform can be simply fabricated by positioning one floating body at the center node and using one float socket frame 100 and the connecting frames 200.

In addition, the durability of the floating body platform is further increased by unit pontoons, which are naturally created geometrically (as an example, the hatched area between pontoons No. 2 and No. 5) by simply connecting the floating body unit pontoons arranged along the sides of the hexagon with the connecting frames 200.

That is, in the case of the upper horizontal row, the number of actual floating body unit pontoons installed along one side is two, but geometrically, it is equivalent to three overlapping floating body unit pontoons.

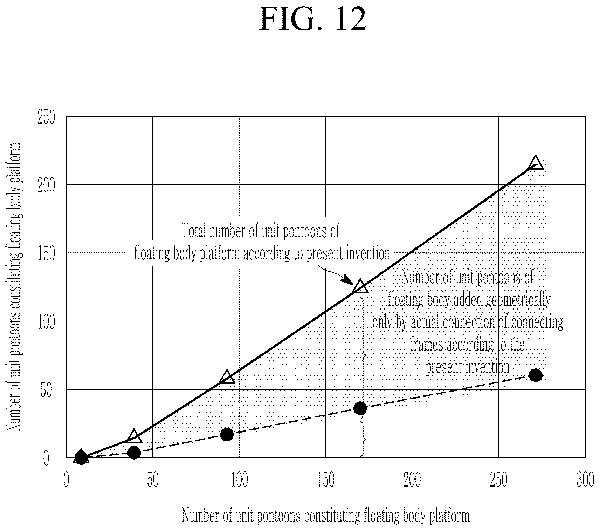

FIG. 12 shows the total number of floating body unit pontoons existing within the floating body platform, including the overlapping floating body unit pontoons, from the actual unit pontoons required to be installed according to the number of floating bodies when configuring a floating body platform of a hexagonal arrangement of a plurality of honeycomb floating body unit pontoons, an embodiment of the present invention, and the geometric unit pontoons created by connecting adjacent floating body unit pontoons only with the connecting frames.

It can be seen that, as the number of floating bodies increases, i.e. the installation area increases, the number of geometric unit pontoons increases sharply, making the floating body platform more economical and enhancing the binding strength between the unit pontoons to prevent separation, thereby improving durability and impact resistance by allowing flexible adaptation to waves and swells.

In addition, when using the circumscribed hexagonal floating body platform of the present invention, it is possible for the installation area (utilization area) to completely occupy the sea area, as shown in FIG. 8.

Although the present disclosure has been described in connection with what is presently considered to be practical exemplary embodiments, one skilled in the art would appreciate that the present invention is not limited thereto and various modifications and variations can be made without departing from the scope of the claims described below.

**<Description of symbols>**

    10: floating body unit group
    11: floating body

100: socket frame
200: connecting frame

**Claims**

1.  A floating body platform comprising:

    a plurality of socket frames on which floating bodies are installed; and
    a plurality of connecting frames configured to connect the plurality of socket frames, wherein
    the plurality of socket frames and the plurality of connecting frames are connected to each other to form a plurality
    of floating body unit groups each having a hexagonal truss structure.

2.  The floating body platform of claim 1, wherein:

    each of the socket frames comprises a plurality of socket portions arranged radially around a central portion, and
    each of the plurality of socket portions forms a 60° angle with respect to an adjacent socket portion.

3.  The floating body platform of claim 1 or claim 2, wherein:

    the plurality of connecting frames are connected to the plurality of socket portions, respectively, and
    each of the plurality of connecting frames forms a 60° angle with an adjacent connecting frame.

4.  The floating body platform of any one of claim 1 to claim 3, wherein:
    each of the socket portions has a hollow tube shape with an empty interior.

5.  The floating body platform of any one of claim 1 to claim 4, wherein:
    each of the connecting frames has the same cross-sectional shape as that of each of the socket portions.

6.  The floating body platform of any one of claim 1 to claim 5, wherein:
    the plurality of socket frames and the plurality of connecting frames each have an inverted trapezoidal cross-sectional
    shape.

7.  The floating body platform of any one of claim 1 to claim 6, wherein:

    the plurality of socket portions comprise
    a plurality of first socket portions to which six connecting frames are connected,
    a plurality of second socket portions to which four connecting frames are connected, and
    a plurality of third socket portions to which three connecting frames are connected.

8.  The floating body platform of any one of claim 1 to claim 7 comprising:
    a plurality of auxiliary socket frames arranged within the floating body unit groups.

9.  The floating body platform of any one of claim 1 to claim 8, wherein:
    the floating bodies are not installed on the plurality of auxiliary socket frames.

10. The floating body platform of any one of claim 1 to claim 9, wherein:

    the plurality of auxiliary socket frames comprise
    a plurality of first auxiliary socket portions to which four connecting frames are connected, and
    a plurality of second auxiliary socket portions to which three connecting frames are connected.

11. The floating body platform of any one of claim 1 to claim 10, wherein:
    the plurality of first auxiliary socket portions and the plurality of second auxiliary socket portions each have a hollow
    tube shape with an empty interior.

12. The floating body platform of any one of claim 1 to claim 11, wherein:
    the plurality of first auxiliary socket portions and the plurality of second auxiliary socket portions each have an inverted trapezoidal cross-sectional shape.

13. The floating body platform of any one of claim 1 to claim 12, wherein:

a number (NN) of the floating bodies of the floating body platform is set to satisfy Equation (1),

$$\text{number (NN) of floating bodies} = 3 \times n \times (n\text{-}1) + 1 \text{ --- Equation (1)}$$

where n refers to the number of floating bodies arranged on Lc, and Lc refers to a length of one side of a regular hexagon inscribed in an installation area forming a virtual circle.

14. The floating body platform of any one of claim 1 to claim 13, wherein:
a length of each of the connecting frames of the floating body platform is set to satisfy Equation (2). length (Lp) of the connecting frame = Lc/(n-1)Equation (2)

15. The floating body platform of any one of claim 1 to claim 14, wherein:

a number of the floating bodies arranged within a horizontal or vertical width of the floating body platform is set to satisfy Equation (3). number (NL) of floating bodies = $2 \times$ (n-1)

16. The floating body platform of any one of claim 1 to claim 15, wherein:

a number of the floating body unit groups of the floating body platform is set to satisfy Equation (4). number (NP) of floating body unit groups = ¾ $\times$ n $\times$ (n-2) + 1)

17. The floating body platform of any one of claim 1 to claim 16, wherein:

a number of triangles of the floating body platform is set to satisfy Equation (5). number (S) of triangles of floating body platform = 6 $\times$ (n-1) $\times$ (n- 1)

18. A photovoltaic power generation system comprising the floating body platform of any one of claims 1 to 17.

# FIG. 1

50A

Lifting force FL(Lifeing force)

MY : Yawing moment
(motion in which direction of ocean currents changes)

(20A, 30A)

Drag force FD (pushing force of ocean currents)

MR : Rolling moment
(lateral oscillation with respect to
direction of ocean currents)

40A

Ocean wind

Wave

Ocean current

Side force FS
(Side force)

MP : Pitching moment
(up-down oscillation with respect to
direction of ocean currents)

10A

EP 4 611 254 A1

# FIG. 2

# FIG. 3

## FIG. 4

FIG. 5

# FIG. 6

# FIG. 7

Lc

Lp

100

Given sea area

RC  30 degrees

Hexagonal installation area or
utilization area inscribed in
given sea area

# FIG. 8

Lc

Lp

100

30 degrees

RC

Given sea area

Hexagonal installation area or
utilization area circumscribed
around given sea area

# FIG. 9

Ocean current or ocean wind

(1) (5) (9)

(2) (6) (10)

(3) (7) (11)

(4) (8) (12)

Given sea area

100

Quadrilateral whose 50% or
more area is included within sea area

# FIG. 10

Ocean current or ocean wind

Sea area

100

Quadrilateral whose 50% or more area is included within sea area

(1) (2) (3) (4) (5) (6) (7) (8) (9) (10)

# FIG. 11

Ocean current or ocean wind

Actually required unit pontoon according to present invention

Sea area

100

Area filled through connecting frames between floating body pontoons according to present invention

Floating body platform placed in hexagon inscribed in sea area according to present invention

# FIG. 12

Number of unit pontoons constituting floating body platform

Total number of unit pontoons of floating body platform according to present invention

Number of unit pontoons of floating body added geometrically only by actual connection of connecting frames according to the present invention

Number of unit pontoons constituting floating body platform

## INTERNATIONAL SEARCH REPORT

| International application No. |
|---|
| **PCT/KR2023/011029** |

| A. | CLASSIFICATION OF SUBJECT MATTER |
|---|---|

**H02S 10/40**(2014.01)i; **H02S 20/00**(2014.01)i; **H02S 30/10**(2014.01)i

According to International Patent Classification (IPC) or to both national classification and IPC

| B. | FIELDS SEARCHED |
|---|---|

Minimum documentation searched (classification system followed by classification symbols)

H02S 10/40(2014.01); B63B 21/50(2006.01); B63B 35/44(2006.01); B63B 39/00(2006.01); H01L 31/042(2006.01); H01L 31/048(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 태양광(solar), 부유체(floating body), 소켓 프레임(socket frame), 연결 프레임 (connecting frame), 육각형(hexagonal)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0086874 A1 (SUNNY RICH AGRIC. & BIOTECH CO., LTD.) 25 March 2021 (2021-03-25) See paragraphs [0065]-[0067] and figures 9-15. | 1-3 |
| X | WO 2022-108518 A1 (G8 SUBSEA PTE. LTD.) 27 May 2022 (2022-05-27) See claims 1-30 and figure 1. | 1-3 |
| A | KR 10-2014-0056746 A (KOREA WATER RESOURCES CORPORATION) 12 May 2014 (2014-05-12) See claims 1-6 and figure 1. | 1-3 |
| A | JP 2005-506706 A (LAING, Nikolaus Johannes) 03 March 2005 (2005-03-03) See entire document. | 1-3 |
| A | US 2011-0232727 A1 (CANGINI, Elvio et al.) 29 September 2011 (2011-09-29) See entire document. | 1-3 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 October 2023** | **31 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/011029**

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **4-18**
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/KR2023/011029**

| Patent document cited in search report | | | Publication date (day/month/year) | Patent family member(s) | | | Publication date (day/month/year) |
|---|---|---|---|---|---|---|---|
| US | 2021-0086874 | A1 | 25 March 2021 | BR | 112020017155 | A2 | 22 December 2020 |
| | | | | CN | 111741892 | A | 02 October 2020 |
| | | | | EP | 3760532 | A1 | 06 January 2021 |
| | | | | EP | 3760532 | A4 | 17 November 2021 |
| | | | | JP | 2021-514888 | A | 17 June 2021 |
| | | | | MX | 2020008888 | A | 12 October 2020 |
| | | | | US | 11319035 | B2 | 03 May 2022 |
| | | | | WO | 2019-161561 | A1 | 29 August 2019 |
| WO | 2022-108518 | A1 | 27 May 2022 | None | | | |
| KR | 10-2014-0056746 | A | 12 May 2014 | KR | 10-1398292 | B1 | 26 May 2014 |
| JP | 2005-506706 | A | 03 March 2005 | AT | 396504 | T | 15 June 2008 |
| | | | | AU | 2002-362938 | B2 | 28 August 2008 |
| | | | | AU | 2008-203786 | A1 | 28 August 2008 |
| | | | | CN | 101308879 | A | 19 November 2008 |
| | | | | CN | 101308879 | B | 23 March 2011 |
| | | | | CN | 1568550 | A | 19 January 2005 |
| | | | | CN | 1568550 | C | 25 June 2008 |
| | | | | DE | 10150176 | A1 | 17 April 2003 |
| | | | | DE | 10214408 | A1 | 09 October 2003 |
| | | | | EP | 1440479 | A2 | 28 July 2004 |
| | | | | EP | 1440479 | B1 | 21 May 2008 |
| | | | | ES | 2306813 | T3 | 16 November 2008 |
| | | | | JP | 2011-097083 | A | 12 May 2011 |
| | | | | JP | 4955194 | B2 | 20 June 2012 |
| | | | | PT | 1440479 | E | 29 August 2008 |
| | | | | US | 2005-0028524 | A1 | 10 February 2005 |
| | | | | US | 7299632 | B2 | 27 November 2007 |
| | | | | WO | 03-034506 | A2 | 24 April 2003 |
| | | | | WO | 03-034506 | A3 | 16 October 2003 |
| | | | | WO | 0303-4506 | A8 | 17 June 2004 |
| | | | | ZA | 200402761 | B | 08 April 2005 |
| US | 2011-0232727 | A1 | 29 September 2011 | CA | 2744686 | A1 | 10 June 2010 |
| | | | | EP | 2373931 | A2 | 12 October 2011 |
| | | | | IL | 213188 | A | 31 July 2011 |
| | | | | IT | 1392792 | B1 | 23 March 2012 |
| | | | | IT | MI20082133 | A1 | 03 June 2010 |
| | | | | WO | 2010-064105 | A2 | 10 June 2010 |
| | | | | WO | 2010-064105 | A3 | 12 August 2010 |

Form PCT/ISA/210 (patent family annex) (July 2022)